# EUROPÄISCHE PATENTSCHRIFT

(11) **EP 2 544 997 B1**
(45) Veröffentlichungstag und Bekanntmachung des Hinweises auf die Patenterteilung: **30.11.2016**
(21) Anmeldenummer: 11706830.4
(22) Anmeldetag: 08.03.2011
(51) Int. Cl.: C01B 31/12, B01J 20/20, B01J 20/28, B01J 20/30, C01B 31/08, H01G 11/34, H01B 1/04

(54) **VERFAHREN ZUR HERSTELLUNG VON MIT BASE AKTIVIERTEM KOHLENSTOFF**
METHOD FOR PRODUCING BASE-ACTIVATED CARBON
PROCÉDÉ POUR LA PRODUCTION D'UN CHARBON ACTIVÉ AVEC UNE BASE

(30) Priorität: 09.03.2010 DE 102010002706
(43) Veröffentlichungstag der Anmeldung: 16.01.2013
(73) Patentinhaber: Corning Incorporated, Corning, New York 14831 (US)
(72) Erfinder: KIRSCHBAUM, Thomas, 86485 Biberbach (DE); ROTA, Astrid, 89415 Lauingen (DE)
(74) Vertreter: Sturm, Christoph
(86) Internationale Anmeldenummer: PCT/EP2011/053442
(87) Internationale Veröffentlichungsnummer: WO 2011/110543

(56) Entgegenhaltungen:
- EP-A1- 1 142 831
- EP-A1- 1 498 389
- CANSADO ET AL: "High micropore activated carbon prepared from polyetheretherketone", CARBON, ELSEVIER, OXFORD, GB, Bd. 45, Nr. 12, 21. September 2007 (2007-09-21), Seiten 2454-2455, XP022264230, ISSN: 0008-6223, DOI: DOI:10.1016/J.CARBON.2007.07.004

## Beschreibung

Die vorliegende Erfindung betrifft ein Verfahren zur Herstellung von insbesondere zur Verwendung in Doppelschichtkondensatoren geeignetem, aktiviertem Kohlenstoff.

Aktivierter Kohlenstoff bzw. Aktivkohle wird aufgrund seiner hohen Porosität vorwiegend als Adsorptionsmaterial insbesondere zur Entfernung von unerwünschten Farbstoffen, Geschmacksstoffen und/oder Geruchsstoffen aus Gasen und Flüssigkeiten, beispielsweise bei der Abwasserreinigung oder bei der Luftreinigung, einesetzt. Dabei kann der aktivierte Kohlenstoff je nach Anwendung in der Form von Granulat, Pulver oder Pellet eingesetzt werden.

Abgesehen davon findet aktivierter Kohlenstoff ebenfalls aufgrund seiner hohen Porosität Anwendung als Elektrodenmaterial, beispielsweise in Doppelschichtkondensatoren, welche aufgrund ihrer großen Energiedichte zunehmend an Bedeutung gewinnen. Solche Doppelschichtkondensatoren sind aus zwei voneinander durch einen Separator getrennten, jeweils mit Elektrolyt benetzten Elektroden aufgebaut. Um eine große Energiedichte des Kondensators zu erreichen, müssen die in den Doppelschichtkondensatoren eingesetzten Elektroden neben einer hohen Porosität eine möglichst hohe Dichte aufweisen.

Die Herstellung von aktiviertem Kohlenstoff erfolgt im Allgemeinen durch oxidative thermische Aktivierung bei 600 bis 1000 °C, während der ein Teil des Kohlenstoffs zu Kohlenmonoxid umgewandelt wird, wodurch in dem Kohlenstoff zusätzliche Poren entstehen, wodurch dessen Oberfläche vergrößert wird. Dabei erfolgt die oxidative thermische Aktivierung üblicherweise in der Gegenwart einer starken Base, vorzugsweise Kaliumhydroxid oder einem anderen Alkalimetallhydroxid, weswegen ein mit solch einem Verfahren hergestellter aktivierter Kohlenstoff auch als mit Alkali oder Base aktivierter Kohlenstoff bezeichnet wird.

Ein Problem bei der Aktivierung von Kohlenstoff mit Alkalien bzw. Basen, wie Kaliumhydroxid, besteht darin, dass bei der oxidativen thermischen Behandlung von Kohlenstoff mit einer Base ein Reduktionsprodukt der Base, im Falle von Kaliumhydroxid metallisches Kalium, gebildet wird, welches stark korrosiv ist und daher zu einer Korrosion der Vorrichtung, in welcher die Aktivierung durchgeführt wird, führt.

Um diese Korrosionsproblematik zu verringern, ist in der EP 1 498 389 A1 ein Verfahren zur Herstellung von aktiviertem Kohlenstoff vorgeschlagen worden, bei dem ein pulverförmiges Kohlenstoffmaterial, beispielsweise pulverisierte Pechfasern, mit Kaliumhydroxidpartikeln vermischt werden, bevor die so hergestellte Mischung bei einer Temperatur von wenigstens 80 °C und vorzugsweise unter reduziertem Druck unter Bildung von Granulatteilchen mit einem durchschnittlichen Partikeldurchmesser von maximal 50 mm granuliert wird, anschließend die Granulatteilchen bei einer Temperatur von wenigstens 200 °C vorzugsweise unter reduziertem Druck dehydratisiert werden und die dehydratisierten Granulatteilchen dann bei einer Temperatur von 500 bis 900 °C unter einem Stickstoffstrom aktiviert werden. Anschließend können die aktivierten Kohlenstoffpartikel ggf. mit Bindemittel und Füllstoff zu Elektroden geformt werden. Zudem wird in dieser Druckschrift ein alternatives Verfahren beschrieben, bei dem zunächst eine Mischung aus pulverförmigem Kohlenstoffmaterial und Kaliumhydroxid einer Wärmebehandlung bei maximal 300 °C unterzogen wird, bevor die so behandelte Mischung durch Druckformen zu Pellets mit einem Durchmesser von maximal 20 mm gepresst wird und diese Pellets dann bei einer Temperatur zwischen 600 und 1.000 °C unter einem Stickstoffstrom einer Wärmebehandlung unterzogen werden. Anschließend werden die Pellets mit Wasser, dann mit verdünnter Salzsäure und wiederum mit Wasser gewaschen, um aktivierte Kohlenstoffpartikel mit einem Partikeldurchmesser von beispielsweise 20 µm zu erhalten.

Obwohl bei den in der EP 1 498 389 A1 beschriebenen Verfahren im Vergleich zu entsprechenden Verfahren, bei denen die Aktivierung mit einer Kaliumhydroxidschmelze erfolgt, eine geringere Korrosion der Vorrichtung, in welcher der aktivierte Kohlenstoff hergestellt wird, auftritt, wird bei diesen Verfahren dennoch korrosiver Kaliumdampf gebildet und bei der Aktivierung über den Stickstoffstrom in der Vorrichtung verteilt, so dass sich das Kalium in den kälteren Bereichen der Vorrichtung anreichert und dort zu Korrosion führt. Abgesehen davon ist dieses Verfahren insbesondere aufgrund der Notwendigkeit der Granulatbildung, welche vorzugsweise bei erhöhter Temperatur und unter reduziertem Druck stattfindet, sehr aufwendig.

Aufgabe der vorliegenden Erfindung ist es daher, ein Verfahren zur Herstellung von aktiviertem Kohlenstoff bereitzustellen, welches einfach durchzuführen ist, bei dem eine Korrosion in der Vorrichtung, in welcher der Kohlenstoff aktiviert wird, zuverlässig verhindert wird, und mit dem aktivierter Kohlenstoff erhalten wird, welcher eine zur Verwendung in Doppelschichtkondensatoren hervorragend geeignete Dichte und Porosität aufweist.

Erfindungsgemäß wird diese Aufgabe gelöst durch ein Verfahren zur Herstellung von aktiviertem Kohlenstoff, welches die nachfolgenden Schritte umfasst:
a) Herstellen einer Mischung aus einem Kohlenstoffmaterial, einer Base und einem gegenüber der Base chemisch inerten, hydrophilen Polymer,
b) Verpressen der in dem Schritt a) hergestellten Mischung zu einem Pressling und
c) Aktivieren des in dem Schritt b) hergestellten Presslings.

Diese Lösung basiert auf der überraschenden Erkenntnis, dass durch ein Verfahren, bei dem zunächst eine Mischung aus einem vorzugsweise pulverförmigen Kohlenstoffmaterial, einer Base und einem gegenüber der Base chemisch inerten, hydrophilen Polymer hergestellt und zu einem Pressling verpresst wird, bevor dieser Pressling oxidativ thermisch aktiviert wird, die Bildung und Verteilung von Reduktionsprodukt der Base, wie dampfförmigem Kalium, in der Vorrichtung, in welcher die Aktivierung durchgeführt wird, zuverlässig vermieden wird. Dies liegt zum einen daran, dass während und nach der Aktivierung kein Pulver gehandhabt wird, aus dem aufgrund dessen im Vergleich zu einem Pressling hohen Oberfläche pro Gewicht während den bei der Aktivierung herrschenden hohen Temperaturen einfach Kaliumdampf heraustreten kann. Zudem wird durch den Zusatz des hydrophilen Polymers bei dem Verpressen der Mischung ein insbesondere auch während den bei der Aktivierung herrschenden hohen Temperaturen formstabiler dichter Pressling erhalten, weil das Polymer überraschenderweise als Bindemittel wirkt, also die Kohlenstoffmaterialpartikel und Basenpartikel miteinander verklebt. Aus diesem Grund wird ein Auseinanderfallen des Presslings auch während der hohen bei der Aktivierung herrschenden Temperaturen zuverlässig verhindert. Durch die stabilen Presslinge wird während der Aktivierung ein inniger Kontakt der Reagenzien ermöglicht und dadurch wird während der Aktivierung eine höhere Reaktivität bzw. eine hohe Ausnutzung der eingesetzten Base erreicht, so dass bei dem erfindungsgemäßen Verfahren nur eine vergleichsweise geringe Menge an Base eingesetzt werden muss. Ferner muss bei dem erfindungsgemäßen Verfahren die Aktivierung nicht unter einem Gasstrom, wie Stickstoffstrom, erfolgen; vielmehr erfolgt die Inertisierung während der Aktivierung durch die Pyrolysegase von dem Kohlenstoffmaterial und dem hydrophilen Polymer selbständig, so dass in der Vorrichtung vorliegender Kaliumdampf nicht in der Vorrichtung verteilt werden kann. Ein weiterer Vorteil des erfindungsgemäßen Verfahrens liegt in der frei wählbaren Größe des Presslings, was dem Verfahren eine große Flexibilität verleiht. Zudem können mit diesem Verfahren insbesondere auch sehr große Platten hergestellt werden, was eine effektive Beladung des Ofenraums ermöglicht.

Unter dem in dem Verfahrensschritt a) des erfindungsgemäßen Verfahrens eingesetzten Kohlenstoffmaterial wird im Sinne der vorliegenden Erfindung jedes hohe Mengen an Kohlenstoff enthaltende Material verstanden, insbesondere ein Material, welches zu wenigstens 70 Gew.-%, besonders bevorzugt zu wenigstens 80 Gew.-% und ganz besonders bevorzugt zu wenigstens 90 Gew.-% aus Kohlenstoff besteht.

Zudem wird im Sinne der vorliegenden Erfindung unter einem hydrophilen Polymer ein bei 23 °C flüssiges Polymer mit einer Löslichkeit in Wasser bei 23 °C von 10 g/l verstanden oder ein bei 23 °C festes Polymer mit einem Kontaktwinkel gegenüber Wasser von weniger als 90°. Zudem umfasst der Begriff Polymer im Sinne der vorliegenden Erfindung neben Polymeren im engeren Sinne auch Oligomere.

Unter einem gegenüber der eingesetzten Base chemisch inerten Polymer wird im Sinne der vorliegenden Erfindung ein Polymer verstanden, welches mit der Base nicht reagiert und insbesondere keine Zersetzung, insbesondere keine Kettenverkürzung erleidet, wenn sich dieses für 24 Stunden bei 200 °C in Kontakt mit der Base befindet. Zudem erleidet das chemisch inerte Polymer vorzugsweise keinen Verlust der bindenden Eigenschaften, wenn sich dieses für 24 Stunden bei 200 °C in Kontakt mit der Base befindet.

Vorzugsweise finden die Verfahrensschritte a), b) und c) unmittelbar hintereinander, d.h. ohne weitere Zwischenschritte statt, d.h. die in dem Verfahrensschritt a) hergestellte Mischung und auch der in dem Verfahrensschritt b) hergestellte Pressling werden ohne Zwischenschritt, insbesondere ohne Dehydratisierungsschritt und/oder Granulierungsschritt, dem Verfahrensschritt b) bzw. dem Verfahrensschritt c) unterworfen. Dadurch kann auf einfache, schnelle und kostengünstige Weise aktivierter Kohlenstoff hergestellt werden.

Erfindungsgemäß kann in dem Verfahrensschritt a) jedes gegenüber der eingesetzten Base chemisch inerte, hydrophile Oligomer oder Polymer eingesetzt werden. Gute Ergebnisse werden beispielsweise erzielt, wenn als hydrophiles Polymer ein Polyether oder bevorzugt ein Polyetherpolyol eingesetzt wird.

In Weiterbildung des Erfindungsgedankens wird es vorgeschlagen, in dem Verfahrensschritt a) als hydrophiles Polymer ein Polyetherpolyol gemäß der allgemeinen Formel I einzusetzen:

HO(-R-O-)ₙH (I),

worin
n eine ganze Zahl zwischen 2 und 100.000, bevorzugt zwischen 2 und 1.000 und besonders bevorzugt zwischen 100 und 600 ist und R eine geradkettige oder verzweigtkettige, ggf. mit einer oder mehreren Hydroxylgruppe(n) substituierte Alkylengruppe, bevorzugt eine ggf. mit einer oder mehreren Hydroxylgruppe(n) substituierte C₁-C₁₅-Alkylengruppe und besonders bevorzugt eine ggf. mit einer oder mehreren Hydroxylgruppe(n) substituierte C₁-C₁₀-Alkylengruppe. Alle diese Polyetherpolyole sind gegenüber gängigen Basen chemisch inert und weisen eine für das erfindungsgemäße Verfahren ausreichende Hydrophilizität auf.

Besonders bevorzugte Polyetherpolyole gemäß der allgemeinen Formel I sind solche mit einer C₁-C₆-Alkylengruppe, welche ggf. mit einer oder mehreren Hydroxylgruppe(n) substituiert ist, als Rest R, also solche ausgewählt aus der Gruppe bestehend aus Polymethylenglykol, Polyethylenglykol, Polypropylenglykol, Polybutylenglykol, Polypentylenglykol, Polyhexylenglykol, Polyglycerinen und beliebigen Mischungen von zwei oder mehr der vorgenannten Verbindungen. Für die vorliegende Erfindung besonders geeignete Polyglycerine sind Verbindungen gemäß der allgemeinen Formel II: 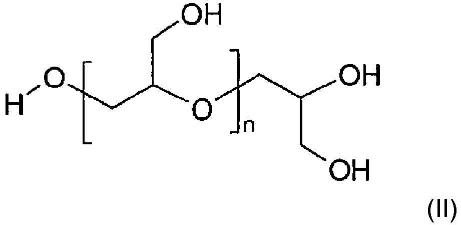 worin
n eine ganze Zahl zwischen 2 und 100.000, bevorzugt zwischen 2 und 1.000 und besonders bevorzugt zwischen 100 und 600 ist.

Gemäß einer besonders bevorzugten Ausführungsform der vorliegenden Erfindung wird in dem Verfahrensschritt a) als hydrophiles Polymer Polypropylenglykol und/oder Polyethylenglykol eingesetzt, wobei sich insbesondere flüssiges Polypropylenglykol und/oder Polyethylenglykol und insbesondere Polyethylenglykol mit einem gewichtsgemittelten Molekulargewicht (Mw) von 200 bis 600 g/mol als besonders geeignet erwiesen hat. Wenn festes Polypropylenglykol und/oder Polyethylenglykol eingesetzt wird, wird dieses vorzugsweise als feines Pulver mit einem durchschnittlichen Partikeldurchmesser zwischen 0,1 und 1.000 µm, besonders bevorzugt mit einem durchschnittlichen Partikeldurchmesser zwischen 0,5 und 50 µm und ganz besonders bevorzugt mit einem durchschnittlichen Partikeldurchmesser zwischen 1 und 10 µm eingesetzt, damit das feste Polypropylenglykol und/oder Polyethylenglykol homogen mit dem Kohlenstoffmaterial vermischt werden kann. Im Einklang mit der üblichen Definition dieses Parameters wird unter einem durchschnittlichen Partikeldurchmesser der d₅₀-Wert verstanden, also der Wert des Partikeldurchmessers, den 50% der vorliegenden Partikel unterschreiten, d.h. 50% aller vorliegenden Partikel haben einen kleineren Partikeldurchmesser als der d₅₀-Wert.

Insbesondere in dem Fall, dass in dem Verfahrensschritt a) ein flüssiges hydrophiles Polymer eingesetzt ist, ist es bevorzugt, um ein Lösen der Base in dem Polymer zu vermeiden, zunächst das hydrophile Polymer mit dem Kohlenstoffmaterial zu vermischen, bevor anschließend die Base zu der so hergestellten Mischung zugegeben und mit dieser vermischt wird. Vorzugsweise wird hierfür als Mischer ein Intensivmischer eingesetzt.

Grundsätzlich können in dem Verfahrensschritt a) alle Basen eingesetzt werden, welche für eine oxidative chemische Aktivierung von Kohlenstoff geeignet sind, wobei für diesen Zweck insbesondere Alkalimetallhydroxide und Alkalimetallcarbonate geeignet sind, wie bevorzugt Lithiumhydroxid, Natriumhydroxid, Natriumcarbonat und Kaliumcarbonat und ganz besonders bevorzugt Kaliumhydroxid.

Auch die Base wird, sofern diese, was bevorzugt ist, bei Raumtemperatur ein Feststoff ist, vorzugsweise als Pulver zugegeben, wobei der durchschnittliche Partikeldurchmesser der Base bevorzugt zwischen 0,1 und 1.000 µm und besonders bevorzugt zwischen 0,5 und 100 µm beträgt.

Prinzipiell können in dem Verfahrensschritt a) alle Kohlenstoffmaterialien eingesetzt werden, wobei insbesondere mit Pyrolyseprodukten von Kohle, Erdöl oder Holz, wie beispielsweise Pech und Koks, gute Ergebnisse erhalten werden. Besonders gute Ergebnisse werden erhalten, wenn in dem Verfahrensschritt a) als Kohlenstoffmaterial Grünkoks eingesetzt wird, also nicht calcinierter Koks mit 10 bis 15 % volatilen Anteilen. Dabei eignen sich für die vorliegende Erfindung alle Arten von Grünkoks, wie isotropischer Koks, Elektrodenkoks und Nadelkoks, und ganz besonders bevorzugt pulverförmiger Grünkoks mit einem durchschnittlichen Partikeldurchmesser zwischen 0,1 und 1.000 µm. Der konkret bevorzugte Partikeldurchmesser des in dem Verfahrensschritt a) eingesetzten Grünkoks hängt von der Art der späteren Anwendung des aktivierten Kohlenstoffs ab. Während für die Verwendung als Adsorptionsmaterial beispielsweise durchschnittliche Partikeldurchmesser von etwa 500 µm bevorzugt sind, ist für die Verwendung als Elektrodenmaterial ein kleinerer durchschnittlicher Partikeldurchmesser bevorzugt, insbesondere ein durchschnittlicher Partikeldurchmesser zwischen 0,5 und 50 µm und besonders bevorzugt ein durchschnittlicher Partikeldurchmesser zwischen 1 und 10 µm. Wenn der aktivierte Kohlenstoff in einem Doppelschichtkondensator eingesetzt werden soll, beträgt der durchschnittliche Partikeldurchmesser des in dem Verfahrensschritt a) eingesetzten Grünkoks höchst bevorzugt 5 bis 10 µm.

Ferner hat es sich im Rahmen der vorliegenden Erfindung als vorteilhaft erwiesen, wenn das in dem Verfahrensschritt a) eingesetzte Kohlenstoffmaterial, bevorzugt pulverförmiger Grünkoks, keine oder nur eine sehr geringe Porosität von kleiner als 10 m²/g aufweist.

Grundsätzlich können die einzelnen Komponenten in dem Verfahrensschritt a) in jedem beliebigen Verhältnis zueinander eingesetzt werden, wobei durch den Basengehalt der Grad der Aktivierung des Kohlenstoffs eingestellt wird mit der Maßgabe, dass ein höherer Basengehalt in der in dem Verfahrensschritt a) hergestellten Mischung eine größere spezifische Oberfläche des aktivierten Kohlenstoffs bedingt, und wobei durch den Gehalt an hydrophilem Polymer die Formbeständigkeit des in dem Verfahrensschritt b) hergestellten Presslings eingestellt wird mit der Maßgabe, dass ein höherer Polymergehalt eine größere Formstabilität des Presslings bedingt. Aus diesem Grund ist es bevorzugt, dass der Anteil an hydrophilem Polymer in der Mischung 3 bis 10 Gew.-% beträgt, wohingegen das Verhältnis Kohlenstoffmaterial/Base bevorzugt 1:1,5 bis 1:2 beträgt.

Unter Berücksichtigung dieser Tendenzen wird es in Weiterbildung des Erfindungsgedankens vorgeschlagen, in dem Verfahrensschritt a) eine Mischung herzustellen, welche 20 bis 50 Gew.-% Kohlenstoffmaterial, 1 bis 15 Gew.-% hydrophiles Polymer und 35 bis 79 Gew.-% Base, bevorzugt 25 bis 40 Gew.-% Kohlenstoffmaterial, 2 bis 10 Gew.-% hydrophiles Polymer und 50 bis 73 Gew.-% Base und besonders bevorzugt 30 bis 35 Gew.-% Kohlenstoffmaterial, 3 bis 7 Gew.-% hydrophiles Polymer und 58 bis 67 Gew.-% Base enthält.

In einer besonders bevorzugten Ausführungsform der vorliegenden Erfindung enthält die in dem Verfahrensschritt a) hergestellte Mischung 25 bis 40 Gew.-% Grünkoks, 2 bis 10 Gew.-% Polyethylenglykol mit einem Mw von 200 bis 600 g/mol und 50 bis 73 Gew.-% Kaliumhydroxid und besonders bevorzugt 30 bis 35 Gew.-% Grünkoks, 3 bis 7 Gew.-% Polyethylenglykol mit einem Mw von 200 bis 600 g/mol und 58 bis 67 Gew.-% Kaliumhydroxid. Damit kann mit dem erfindungsgemäßen Verfahren aktivierter Kohlenstoff mit einer BET-Oberfläche von bis zu 1.500 oder gar bis zu 2.000 m²/g erhalten werden.

In dem Verfahrensschritt b) wird erfindungsgemäß die in dem Verfahrensschritt a) hergestellte Mischung zu einem Pressling verpresst. Unter einem Pressling wird im Sinne der vorliegenden Erfindung ein Presskörper verstanden, welcher eine längste Ausdehnung, d.h. in dem Fall eines zumindest im Wesentlichen kugelförmigen Pressling einen Durchmesser oder in dem Fall eines Polygons eine Länge, von wenigstens 50 mm, bevorzugt von wenigstens 100 mm, besonders bevorzugt von wenigstens 1 cm und ganz besonders bevorzugt von wenigstens 10 cm aufweist. Ein Beispiel hierfür ist ein quaderförmiger Pressling mit einer Länge und Breite von je ca. 50 cm.

Grundsätzlich kann das Verpressen in dem Verfahrensschritt b) bei jedem geeigneten Pressdruck vorgenommen werden, wobei mit steigendem Druck die Dichte des Presslings ansteigt und deshalb die maximale Ofenbeladung beim Aktivieren erhöht wird. Aus diesem Grund wird das Verpressen in dem Verfahrensschritt b) vorzugsweise so durchgeführt, dass die in dem Verfahrensschritt a) hergestellte Mischung zu einem Pressling mit einer Dichte von wenigstens 1 g/cm³, bevorzugt mit einer Dichte von wenigstens 1,25 g/cm³, besonders bevorzugt mit einer Dichte von wenigstens 1,5 g/cm³ und ganz besonders bevorzugt mit einer Dichte von wenigstens 1,7 g/cm³ verpresst wird.

Mit einem Pressdruck von 100 kg/cm² kann beispielsweise ein Pressling mit einer Dichte von etwa 1 g/cm³ hergestellt werden, wohingegen mit einem Pressdruck von 5 Tonnen/cm² Presslinge mit einer Dichte von etwa 1,7 g/cm³ hergestellt werden können. Aus diesem Grund wird das Verpressen in dem Verfahrensschritt b) bevorzugt in einer Matrizenpresse bei einem Druck von wenigstens 100 kg/cm² durchgeführt.

Für den Erfolg der Wärmebehandlung gemäß dem Verfahrensschritt c) ist in erster Linie die während der Wärmebehandlung erreichte Maximaltemperatur und die Haltezeit dieser Maximaltemperatur wichtig. Erfindungsgemäß wird die Wärmebehandlung des Presslings in dem Verfahrensschritt a) bei einer Maximaltemperatur von 500 bis 1.500 °C durchgeführt, wobei diese bevorzugt auf 700 bis 1.000 °C, besonders bevorzugt auf 700 bis 900 °C und ganz besonders bevorzugt auf 850 bis 900 °C eingestellt wird.

Dabei ist es bevorzugt, dass die Maximaltemperatur für wenigstens 0,5 Stunden, besonders bevorzugt für wenigstens 1 Stunde, ganz besonders bevorzugt für wenigstens 2 Stunden und höchst bevorzugt für wenigstens 3 Stunden gehalten wird.

Die bevorzugte Aufheizrate hängt von der Materialmenge in dem Ofen ab, wobei zur gleichmäßigen Erwärmung großer Materialmengen niedrigere Aufheizraten zweckmäßig sind als zur gleichmäßigen Erwärmung kleiner Materialmengen. In Abhängigkeit von der Materialmenge in dem Ofen werden grundsätzlich gute Ergebnisse erzielt, wenn die Aufheizrate 1 bis 100 °C/Min, bevorzugt 2 bis 50 °C/Min und besonders bevorzugt 5 bis 25 °C/Min. beträgt.

In Weiterbildung des Erfindungsgedankens wird es vorgeschlagen, den Pressling in dem Verfahrensschritt c) nach dem Halten bei Maximaltemperatur schnell auf Raumtemperatur abzukühlen, was zweckmäßigerweise derart erfolgen kann, dass der Pressling zunächst in dem Ofen bis auf ungefähr 150 °C abgekühlt wird, bevor der Pressling dann bevorzugt in Wasser abgeschreckt wird.

Gemäß einer weiteren bevorzugten Ausführungsform der vorliegenden Erfindung wird der aktivierte Pressling nach der Wärmebehandlung in einem Verfahrensschritt d) gewaschen, um Verunreinigungen aus dem aktivierten Kohlenstoff zu entfernen. Dabei umfasst der Waschvorgang vorzugsweise wenigstens einen Waschschritt mit einer Mineralsäure, wie Chlorwasserstoff oder Schwefelsäure, gefolgt von mehrmaligen Waschen mit destilliertem Wasser bis zur Neutralität.

Ein weiterer Gegenstand ist aktivierter Kohlenstoff, welcher mit dem zuvor beschriebenen Verfahren erhältlich ist.

Ein solcher aktivierter Kohlenstoff weist bevorzugt eine BET Oberfläche von 1.500 bis 2.000 m²/g auf.

Ein weiterer Gegenstand ist die Verwendung des zuvor beschriebenen aktivierten Kohlenstoffs als Adsorptionsmaterial oder als Elektrode und bevorzugt als Elektrode in einem Doppelschichtkondensator. Nachfolgend wird die vorliegende Erfindung anhand von einem diese erläuternden, diese aber nicht einschränkenden Beispiel weiter beschrieben.

### Beispiel

In einen Intensivmischer der Firma Eirich wurden 1666 g Grünkoks (isotropischer Pechkoks) der Firma Sasol Synfuel Ltd. mit einem durchschnittlichen Partikeldurchmesser von 3 µm und 166 g Polyethylenglykol mit einem Mw von 200 g/mol eingefüllt und für 10 Min. vermischt. Anschließend wurden zu dieser Mischung 3166 g Kaliumhydroxid mit einem durchschnittlichen Partikeldurchmesser von etwa 10 µm zugegeben und diese Mischung erneut für 15 Min. vermischt. Am Ende des Mischvorgangs wurde eine homogene Mischung mit einem durchschnittlichen Partikeldurchmesser von ca. 3 µm erhalten.

Die Mischung wurde dann in eine Presse der Firma Wickert, Model WKP2000S mit einer Matrizengröße von 50 cm x 50 cm x 10 cm eingefüllt und bei Raumtemperatur mit einem Druck von 95 kg/cm² zu einem Pressling mit einer Dichte von 1,0 g/cm³ verpresst.

Anschließend wurde der Pressling in einen Ofen platziert und einer Wärmebehandlung mit einer Aufheizrate von 5 °C/Min., einer Maximaltemperatur von 850 °C und einer Haltezeit von 1 Stunde unterworfen, bevor der aktivierte Pressling in Wasser abgeschreckt wurde und anschließend mit einer Mineralsäure, nämlich Schwefelsäure, gefolgt von mehrmaligen Waschen mit destilliertem Wasser bis zur Neutralität gewaschen wurde.

Aus dem so hergestellten aktivierten Kohlenstoff wurden Elektroden in Form runder Pellets mit einem Durchmesser von 10 mm mit einer Masse von je ca. 10 mg geformt und in einer Swagelok-Zelle mit 1 M Tetraethylammoniumtetrafluoroborat in Acetonitril als Elektrolyt mit einem Separator "Whatman" Glasfaserseparator mit einer Dicke von 30 µm vermessen. Der Doppelschichtkondensator erreichte bei 2,3 V und einem Ladestrom von 500 mA/g eine spezifische elektrische Kapazität von 146 F/g bezogen auf die Elektrode.

## Patentansprüche

1. Verfahren zur Herstellung von aktiviertem Kohlenstoff umfassend die nachfolgenden Schritte:
a) Herstellen einer Mischung aus einem Kohlenstoffmaterial, einer Base und einem gegenüber der Base chemisch inerten, hydrophilen Polymer,
b) Verpressen der in dem Schritt a) hergestellten Mischung zu einem Pressling und
c) Aktivieren des in dem Schritt b) hergestellten Presslings.

2. Verfahren nach Anspruch 1,
**dadurch gekennzeichnet, dass**
in dem Schritt a) als hydrophiles Polymer ein Polyether, bevorzugt ein Polyetherpolyol und besonders bevorzugt ein Polyetherpolyol gemäß der allgemeinen Formel I eingesetzt wird:
HO(-R-O-)ₙH (I),
worin
n eine ganze Zahl zwischen 2 und 100.000, bevorzugt zwischen 2 und 1.000 und besonders bevorzugt zwischen 100 und 600 ist und
R eine geradkettige oder verzweigtkettige, ggf. mit einer oder mehreren Hydroxylgruppe(n) substituierte Alkylengruppe, bevorzugt eine ggf. mit einer oder mehreren Hydroxylgruppe(n) substituierte C₁-C₁₅-Alkylengruppe, besonders bevorzugt eine ggf. mit einer oder mehreren Hydroxylgruppe(n) substituierte C₁-C₁₀-Alkylengruppe und ganz besonders bevorzugt eine ggf. mit einer oder mehreren Hydroxylgruppe(n) substituierte C₁-C₆-Alkylengruppe ist.

3. Verfahren nach Anspruch 2,
**dadurch gekennzeichnet, dass**
in dem Schritt a) als hydrophiles Polymer ein Polymer eingesetzt wird, welches aus der Gruppe ausgewählt wird, welche aus Polymethylenglykol, Polyethylenglykol, Polypropylenglykol, Polybutylenglykol, Polypentylenglykol, Polyhexylenglykol, Polyglycerinen und beliebigen Mischungen von zwei oder mehr der vorgenannten Verbindungen besteht, und insbesondere bevorzugt Polypropylenglykol mit einem gewichtsgemittelten Molekulargewicht von 200 bis 600 g/mol und/oder Polyethylenglykol mit einem gewichtsgemittelten Molekulargewicht von 200 bis 600 g/mol eingesetzt wird.

4. Verfahren nach zumindest einem der vorstehenden Ansprüche,
**dadurch gekennzeichnet, dass**
in dem Schritt a) zunächst das hydrophile Polymer mit dem Kohlenstoffmaterial vermischt wird, bevor anschließend die Base zu der so hergestellten Mischung zugegeben und mit dieser vermischt wird.

5. Verfahren nach zumindest einem der vorstehenden Ansprüche,
**dadurch gekennzeichnet, dass**
in dem Schritt a) als Base ein Alkalimetallhydroxid und/oder Alkalimetallcarbonat, bevorzugt Kaliumhydroxid eingesetzt wird.

6. Verfahren nach zumindest einem der vorstehenden Ansprüche,
**dadurch gekennzeichnet, dass**
in dem Schritt a) als Kohlenstoffmaterial Koks, vorzugsweise Grünkoks und besonders bevorzugt Grünkoks mit einem durchschnittlichen Partikeldurchmesser d₅₀ von 1 bis 10 µm eingesetzt wird.

7. Verfahren nach zumindest einem der vorstehenden Ansprüche,
**dadurch gekennzeichnet, dass**
die in dem Schritt a) eine Mischung hergestellt wird, welche 20 bis 50 Gew.-% Kohlenstoffmaterial, 1 bis 15 Gew.-% hydrophiles Polymer und 35 bis 79 Gew.-% Base, bevorzugt 25 bis 40 Gew.-% Kohlenstoffmaterial, 2 bis 10 Gew.-% hydrophiles Polymer und 50 bis 73 Gew.-% Base und besonders bevorzugt 30 bis 35 Gew.-% Kohlenstoffmaterial, 3 bis 7 Gew.-% hydrophiles Polymer und 58 bis 67 Gew.-% Base enthält.

8. Verfahren nach zumindest einem der vorstehenden Ansprüche,
**dadurch gekennzeichnet, dass**
das Verpressen in dem Schritt b) in einer Matrizenpresse bei einem Druck von wenigstens 100 kg/cm² durchgeführt wird und/oder in dem Schritt b) die in dem Schritt a) hergestellte Mischung zu einem Pressling mit einer Dichte von wenigstens 1 g/cm³ verpresst wird.

9. Verfahren nach zumindest einem der vorstehenden Ansprüche,
**dadurch gekennzeichnet, dass**
das Aktivieren in dem Schritt c) ein Wärmebehandeln des Presslings bei einer Temperatur von 500 bis 1.500 °C, bevorzugt von 700 bis 1.000 °C, besonders bevorzugt von 700 bis 900 °C und ganz besonders bevorzugt von 850 bis 900 °C umfasst und vorzugsweise die Maximaltemperatur bei dem Wärmebehandeln in dem Schritt c) für wenigstens 0,5 Stunden, bevorzugt für wenigstens 1 Stunde, besonders bevorzugt für wenigstens 2 Stunden und ganz besonders bevorzugt für wenigstens 3 Stunden gehalten wird.

## Claims

1. Method for producing activated carbon, which comprises the following steps:
a) producing a mixture of a carbon material, a base, and hydrophilic polymer that is chemically inert towards the base,
b) compacting the mixture produced in step a) to form a briquette and
c) activating the briquette produced in step b).

2. Method according to Claim 1,
**characterized in that**
in step a), as hydrophilic polymer, a polyether, preferably a polyether-polyol, and particularly preferably a polyether-polyol according to the general formula I, is used:
HO(-R-O-)ₙH (I),
where
n is an integer between 2 and 100,000, preferably between 2 and 1,000, and particularly preferably between 100 and 600, and
R is a straight-chain or branched-chain alkylene group, optionally substituted with one or more hydroxyl group(s), preferably a C₁-C₁₅-alkylene group optionally substituted with one or more hydroxyl group(s), particularly preferably a C₁-C₁₀ alkylene group optionally substituted with one or more hydroxyl group(s) and very particularly preferably a C₁-C₆ alkylene group optionally substituted with one or more hydroxyl group(s).

3. Method according to Claim 2,
**characterized in that**
in step a), as hydrophilic polymer, a polymer is used which is selected from the group consisting of polymethylene glycol, polyethylene glycol, polypropylene glycol, polybutylene glycol, polypentylene glycol, polyhexylene glycol, polyglycerol and any mixtures of two or more of the abovementioned compounds, and particularly preferably polypropylene glycol having a weight-average molecular weight from 200 to 600 g/mol and/or polyethylene glycol having a weight-average molecular weight from 200 to 600 g/mol is used.

4. Method according to at least one of the preceding claims,
**characterized in that**
in step a), the hydrophilic polymer is first mixed with the carbon material before the base is then added to the mixture thus produced and mixed therewith.

5. Method according to at least one of the preceding claims,
**characterized in that**
in step a), as base, an alkali metal hydroxide and/or alkali metal carbonate, preferably potassium hydroxide, is used.

6. Method according to at least one of the preceding claims,
**characterized in that**,
in step a), as carbon material coke, preferably green coke, and particularly preferably green coke having an average particle diameter d₅₀ from 1 to 10 µm, is used.

7. Method according to at least one of the preceding claims,
**characterized in that**
in step a), a mixture is produced which contains 20 to 50% by weight carbon material, 1 to 15% by weight hydrophilic polymer, and 35 to 79% by weight base, preferably 25 to 40% by weight carbon material, 2 to 10% by weight hydrophilic polymer and 50 to 73% by weight base, and particularly preferably 30 to 35% by weight carbon material, 3 to 7% by weight hydrophilic polymer and 58 to 67% by weight base.

8. Method according to at least one of the preceding claims, **characterized in that**
the compacting in step b) is carried out in a matrix press at a pressure of at least 100 kg/cm² and/or in the step b), the mixture produced in step a) is compacted to form a briquette having a density of at least 1 g/cm³.

9. Method according to at least one of the preceding claims,
**characterized in that**
the activation in the step c) comprises a heat treatment of the briquette at a temperature from 500 to 1500°C, preferably from 700 to 1000°C, particularly preferably from 700 to 900°C, and very particularly preferably from 850 to 900°C, and preferably the maximum temperature in the heat treatment in the step c) is held for at least 0.5 hours, preferably for at least 1 hour, particularly preferably for at least 2 hours, and very particularly preferably for at least 3 hours.

## Revendications

1. Procédé de fabrication de charbon actif comprenant les étapes suivantes :
a) la fabrication d'un mélange d'un matériau carboné, d'une base et d'un polymère hydrophile chimiquement inerte vis-à-vis de la base,
b) la compression du mélange fabriqué à l'étape a) en un objet pressé, et
c) l'activation de l'objet pressé fabriqué à l'étape b).

2. Procédé selon la revendication 1,
**caractérisé en ce qu'**à
l'étape a), un polyéther, de préférence un polyéther-polyol et de manière particulièrement préférée un polyéther-polyol selon la formule générale I, est utilisé en tant que polymère hydrophile :
HO(-R-O-)ₙH (I)
dans laquelle
n est un nombre entier compris entre 2 et 100 000, de préférence entre 2 et 1 000, et de manière particulièrement préférée entre 100 et 600, et
R est un groupe alkylène linéaire ou ramifié, éventuellement substitué avec un ou plusieurs groupes hydroxyle, de préférence un groupe alkylène en C₁-C₁₅ éventuellement substitué avec un ou plusieurs groupes hydroxyle, de manière particulièrement préférée un groupe alkylène en C₁-C₁₀ éventuellement substitué avec un ou plusieurs groupes hydroxyle, et de manière tout particulièrement préférée un groupe alkylène en C₁-C₆ éventuellement substitué avec un ou plusieurs groupes hydroxyle.

3. Procédé selon la revendication 2,
**caractérisé en ce qu'**à
l'étape a), un polymère choisi dans le groupe constitué par le polyméthylène glycol, le polyéthylène glycol, le polypropylène glycol, le polybutylène glycol, le polypentylène glycol, le polyhexylène glycol, les polyglycérines et les mélanges quelconques de deux ou plus des composés susmentionnés est utilisé en tant que polymère hydrophile, et de manière particulièrement préférée le polypropylène glycol ayant un poids moléculaire moyen en poids de 200 à 600 g/mol et/ou le polyéthylène glycol ayant un poids moléculaire moyen en poids de 200 à 600 g/mol.

4. Procédé selon au moins l'une quelconque des revendications précédentes,
**caractérisé en ce qu'**à
l'étape a), le polymère hydrophile est tout d'abord mélangé avec le matériau carboné, avant d'ajouter ultérieurement la base au mélange ainsi fabriqué et de la mélanger avec celui-ci.

5. Procédé selon au moins l'une quelconque des revendications précédentes,
**caractérisé en ce qu'**à
l'étape a), un hydroxyde de métal alcalin et/ou un carbonate de métal alcalin, de préférence l'hydroxyde de potassium, est utilisé en tant que base.

6. Procédé selon au moins l'une quelconque des revendications précédentes,
**caractérisé en ce qu'**à
l'étape a), du coke, de préférence du coke vert et de manière particulièrement préférée du coke vert ayant un diamètre de particule moyen d₅₀ de 1 à 10 µm, est utilisé en tant que matériau carboné.

7. Procédé selon au moins l'une quelconque des revendications précédentes,
**caractérisé en ce qu'**à
l'étape a), un mélange est fabriqué, qui contient 20 à 50 % en poids de matériau carboné, 1 à 15 % en poids de polymère hydrophile et 35 à 79 % en poids de base, de préférence 25 à 40 % en poids de matériau carboné, 2 à 10 % en poids de polymère hydrophile et 50 à 73 % en poids de base, et de manière particulièrement préférée 30 à 35 % en poids de matériau carboné, 3 à 7 % en poids de polymère hydrophile et 58 à 67 % en poids de base.

8. Procédé selon au moins l'une quelconque des revendications précédentes,
**caractérisé en ce que**
la compression à l'étape b) est réalisée dans une presse matricielle à une pression d'au moins 100 kg/cm² et/ou, à l'étape b), le mélange fabriqué à l'étape a) est comprimé en un objet pressé ayant une densité d'au moins 1 g/cm³.

9. Procédé selon au moins l'une quelconque des revendications précédentes,
**caractérisé en ce que**
l'activation à l'étape c) comprend un traitement thermique de l'objet pressé à une température de 500 à 1 500 °C, de préférence de 700 à 1 000 °C, de manière particulièrement préférée de 700 à 900 °C et de manière tout particulièrement préférée de 850 à 900 °C, et la température maximale lors du traitement thermique à l'étape c) est de préférence maintenue pendant au moins 0,5 heure, de préférence pendant au moins 1 heure, de manière particulièrement préférée pendant au moins 2 heures et de manière tout particulièrement préférée pendant au moins 3 heures.
